Europäisches Patentamt

European Patent Office

Office européen des brevets

(11) Numéro de publication: **0 256 929 B1**

# FASCICULE DE BREVET EUROPEEN

(45) Date de publication de fascicule du brevet:
**05.02.92**

(51) Int. Cl.⁵: **H01M 4/32**

(21) Numéro de dépôt: **87401807.0**

(22) Date de dépôt: **03.08.87**

Le dossier contient des informations techniques présentées postérieurement au dépôt de la demande et ne figurant pas dans le présent fascicule.

(54) **Structure d'électrode à base d'hydroxyde de nickel, dopée au cobalt pour générateur électrochimique.**

(30) Priorité: **06.08.86 FR 8611395**

(43) Date de publication de la demande:
**24.02.88 Bulletin 88/08**

(45) Mention de la délivrance du brevet:
**05.02.92 Bulletin 92/06**

(84) Etats contractants désignés:
**AT BE CH DE ES GB GR IT LI LU NL SE**

(56) Documents cités:
**EP-A- 0 170 573**
**DE-A- 1 671 993**
**US-A- 4 016 091**
**US-A- 4 595 463**

**CHEMICAL ABSTRACTS, vol. 80, no. 12, 25 mars 1974, page 457, résumé no. 66173s, Columbus, Ohio, US; & JP-A-73 18 739 (MATSUSHITA ELECTRIC INDUSTRIAL CO., LTD) 08-06-1973**

**PATENT ABSTRACTS OF JAPAN, vol. 10, no. 79 (E-391)[2136], 28 mars 1986; & JP-A- 60**

225 356 (SANYO DENKI K.K.) 09-11-1985

(73) Titulaire: **SORAPEC Société de Recherches et d'Applications Electrochimiques**
**192 rue Carnot**
**F-94124 Fontenay-sous-BoisCédex(FR)**

(72) Inventeur: **Doniat, Denis**
**3bis, rue J.B. Lanoz**
**F-94170 Le Perreux(FR)**
Inventeur: **Bugnet, Bernard**
**13, allée Guy de Maupassant**
**F-77420 Champs-s/Marne(FR)**

(74) Mandataire: **Gutmann, Ernest et al**
**S.C. Ernest Gutmann - Yves Plasseraud 67, boulevard Haussmann**
**F-75008 Paris(FR)**

# Description

La présente invention concerne une structure d'électrode positive à base d'hydroxyde de nickel, ayant une capacité de charge améliorée, une telle structure d'électrode positive étant utilisable pour la constitution de générateurs électrochimiques à électrolyte liquide, par exemple du type nickel-cadmium.

L'invention concerne plus particulièrement une structure d'électrode perfectionnée dérivée de la structure décrite dans le brevet France n° 79.17540/2.472.842, déposé le 6 Juillet 1979.

Ce brevet décrivait déjà plus particulièrement une structure d'électrode positive, comprenant d'une part un support poreux fibreux à porosité ouverte formant et/ou supportant un collecteur de courant métallique, notamment en nickel inerte, vis-à-vis des réactions électrochimiques devant intervenir dans les cyles de charge-décharge du générateur, et d'autre part, une matière active à base d'hydroxyde de nickel emplissant en partie les pores du collecteur.

Le brevet antérieur décrit également un procédé pour fabriquer une telle structure d'électrodes à partir d'un substrat mince non conducteur à structure poreuse, notamment d'une feuille formée d'un feutre de fibres enchevêtrées non tissées ou d'un tissu poreux. Cette feuille est, par exemple, à base de polychlorure de vinyle, de polypropylène, ou du polyacrylamide connu sous la marque NYLON®.

Une première phase essentielle du procédé décrit comprend alors la réalisation préalable par métallisation du collecteur de courant de préférence en nickel, ce collecteur formant alors un revêtement lui-même poreux, épousant sensiblement la surface développée du substrat et s'étendant dans le volume même du substrat poreux. Le cas échéant, le substrat poreux initial à base de fibres en matières organiques est éliminé par oxydation thermique. Cette première phase est alors suivie d'une seconde phase comprenant la réalisation d'un dépôt de matière active à base d'hydroxyde de nickel dans le volume même du collecteur.

Plus particulièrement, un procédé de fabrication d'une telle structure d'électrode positive comprend l'immersion du collecteur à haute porosité dans une solution électrolytique, notamment de nitrate de nickel, et l'imprégnation électrochimique au sein du collecteur poreux pour réaliser le dépôt, dans les pores de ce dernier, de l'hydroxyde de nickel qui constituera la matière active de l'électrode, cette opération électrochimique étant réglée de façon à ne permettre qu'un remplissage partiel des pores du collecteur avec la matière active.

On se reportera avec avantage au brevet français sus-indiqué ou au brevet américain 4.356.242 correspondant pour avoir davantage de détails relatifs à la constitution et aux performances de telles structures d'électrode, ainsi qu'au brevet français n° 84.0110.

Il est par ailleurs d'usage connu, dans le but d'améliorer certaines caractéristiques des électrods de nickel réalisées à partir de collecteurs de type fritté (amélioration de la stabilité de l'électrode pendant les opérations de cyclage, limitation des variations de volumes pendant le cyclage, aptitude améliorée à la charge à température élevée ou à faible régime de charge) d'introduire dans les solutions d'imprégnation en matière active, des teneurs relativement faibles en nitrate de cobalt (par exemple 5% de cobalt vis-à-vis du nickel). En d'autres termes, la matière active déposée, à base d'hydroxyde de nickel contient alors une faible teneur d'hydroxyde de cobalt répartie de façon homogène au sein de sa masse. Si la présence de l'hydroxyde de cobalt confère effectivement aux électrodes de nickel de type fritté des propriétés améliorées rappelées plus haut, il n'avait jusqu'à ce jour jamais été constaté que le cobalt avait pour effet d'accroître la capacité massique, et d'une façon plus générale, le rendement énergétique des éléctrodes du genre considéré.

Le brevet américain US SN 4595463 décrit des électrodes à base de nickel de type fritté recouvrant des fibres de graphite. Ces électrodes comportent une couche de cobalt ou d'hydroxyde de cobalt recouvrant l'hydroxyde de nickel.

La demande de brevet EP 0170573 décrit des électrodes à hydroxyde de nickel réalisée à partir d'un collecteur bon marché, tel qu'une tôle perforée, un feutre, des fibres de carbone ou des fibres organiques. Ces électrodes peuvent comporter une couche de cobalt recouvrant l'hydroxyde de nickel.

L'invention découle de la découverte que l'incorporation du cobalt dans des conditions appropriées au sein de la matière active peut néanmoins entraîner un accroissement sensible, pouvant atteindre l'ordre de 20 à 25%, de la capacité massique des électrodes à base d'hydroxyde de nickel constituées à partir de collecteurs tels que décrits dans les brevets antérieurs cités plus haut, et plus particulièrement du type support fibreux non tissé et du type réticulé isotrope à porosité ouverte.

Pour atteindre aux conditions appropriées susindiquées, l'invention propose la subdivision de l'opération d'imprégnation électrochimique en hydroxyde de nickel sus-indiquée du collecteur poreux préalablement réalisé, en au moins deux étapes successives distinctes séparées par une imprégnation intermédiaire, non électrochimique, de la structure d'électrode partiellement imprégnée en matière active au terme de la première des deux étapes susdites, avec une solution concentrée de nitrate de cobalt, (bain de "dopage") contenant notamment de 100 à 1000 g/l, de préférence de 200 à 800 g/l de nitrate de cobalt ou d'un sel équivalent par sa capacité à être réduit en hydroxyde de cobalt à l'occasion de la deuxième étape ultérieure de l'imprégnation électrochimique, l'imprégnation non électrochimique autorisant l'incorporation d'une quantité, exprimée en hydroxyde de cobalt final, d'environ 2 à 10% en poids vis à vis de la teneur finale en hydroxyde de nickel de l'électrode finie.

Le procédé selon l'invention implique par conséquent le retrait intermédiaire de l'électrode partiellement imprégnée du bain d'imprégnation électrochimique en hydroxyde de nickel, son sèchage au moins approximatif préalable, pour la réalisation de l'imprégnation non électrochimique (dopage) avec le sel de cobalt, l'électrode partiellement imprégnée en un hydroxyde de nickel et modifiée par l'imprégnation chimique étant ensuite réintroduite dans le bain électrolytique pour effectuer la seconde étape de l'imprégnation électrochimique en hydroxyde de nickel devant conduire au produit fini.

Avantageusement, la première étape de l'imprégnation électrochimique est réglée de façon à ce que la quantité d'hydroxyde de nickel déposée au sein du collecteur, dans les pores de celui-ci soit au total de l'ordre de 70 à 90% de la quantité finale ou voulue d'hydroxyde de nickel dans la structure d'électrode, les 30 à 10% d'hydroxyde de nickel restant étant alors déposés au cours de la seconde étape d'imprégnation électrochimique.

L'imprégnation non électrochimique donne de l'électrode partiellement réalisée avec une solution d'un sel de cobalt transformable ultérieurement en hydroxyde de cobalt, et notamment à l'occasion de la seconde étape sus-indiquée, peut être réalisée de toute façon appropriée : immersion de l'électrode partiellement réalisée dans la solution concentrée du sel, notamment nitrate de cobalt, aspersion de l'électrode partiellement imprégnée avec la solution concentrée de cobalt, application au moyen d'un tampon, etc... L'opération d'imprégnation non électrochimique (dopage), notamment sa durée eu égard à la concentration en sel utilisée, sont conduites de façon à incorporer dans l'électrode une quantité de cobalt qui sera comprise entre environ 2 et environ 10%, avantageusement de l'ordre de 4 à 6% par exemple, d'hydroxyde de cobalt final vis-à-vis de l'hydroxyde de nickel dans l'électrode finale.

L'ensemble du procédé qui vient d'être exposé est avantageusement réalisé à partir d'un collecteur à haute porosité, par exemple de type fibreux non tissé ou de type réticulé isotrope à porosité ouverte dont les pores présentent des diamètres de 3 à 100, notamment de 15 à 100 $\mu$m, les deux étapes de l'imprégnation électrochimique étant réglées de façon à ce que la matière active finale obtenue au terme de la seconde imprégnation électrochimique occupe finalement d'environ 45 à 65%, notamment de 55 à 60% du volume initial des pores du collecteur poreux initialement mis en oeuvre.

Les différentes étapes du procédé décrit dans ce qui précède peuvent être réalisées de façon en soi connue. On pourra encore se reporter aux brevets antérieurs pour ce qui les concernent. On mentionnera également et à titre d'exemple, pour la réalisation de la métallisation du substrat poreux initial, à base de feutre ou de fibres, le procédé décrit par Kanigene, et pour la réalisation des étapes d'imprégnation électrochimique, le procédé de Kandler, par exemple tel qu'il est décrit dans la demande de brevet allemand publié 1.133.442, ou dans le brevet suisse 389.699.

On expose encore ci-après des conditions expérimentales préférées et applicables pour l'obtention des électrodes perfectionnées selon l'invention :

- Nature du bain de dopage : Solution actuellement à 500 g/l de nitrate de cobalt. Suivant la teneur en Co visée, cette concentration pourrait être comprise entre 200 et 800 g/l.
- Température du bain de dopage : comprise entre l'ambiante et 45°C.
- Temps : très court - Inférieur à 1 min.
- L'imprégnation par la solution de dopage peut être réalisée soit par immersion, soit par aspersion, soit au moyen d'un tampon.
- L'opération est effectuée entre deux imprégnations électrochimiques d'hydroxyde de nickel, sur des électrodes rincées et séchées.
- L'électrode imprégnée par la solution de nitrate de cobalt est immergée dans le bain d'imprégnation électrochimique non agité, et est mise sous tension le plus rapidement possible (l'idéal est l'immersion sous tension).
- La quantité d'hydroxyde de nickel en place dans l'électrode au moment du dopage est comprise entre 70 et 90% de la quantité finale.
- Le démarrage au moins de la seconde imprégnation électrochimique (suivant le dopage) s'effectue en l'absence d'agitation, afin d'éviter une dilution trop importante dans le bain, des sels de cobalt qui doivent être fixés dans l'électrode.

On remarquera que les résultats les plus favorables sont obtenus lorsque l'on a recours, pour la fabrication des électrodes positives selon l'invention à un collecteur à haute porosité du type feutre. On obtient cependant également des rendements massiques beaucoup plus élevés avec des électrodes réalisées à partir de collecteurs à haute porosité, du type réticulé isotrope à porosité ouverte, même si l'accroissement de capacité massique n'atteint pas les 20 à 25% supplémentaires qui peuvent être obtenus avec les électrodes réalisées à partir de feutres poreux.

Il est encore remarquable que l'accroissement de capacité massique apparaît dû à l'hétérogénéité de distribution du cobalt au sein de la matière active logée à l'intérieur du support fibreux à haute porosité constituant le collecteur de courant. En effet, l'accroissement de capacité massique que l'invention permet d'obtenir ne s'observe pas au terme de la mise en oeuvre du procédé classique en une seule étape d'imprégnation électrochimique, mettant en jeu dès l'origine une solution électrolytique à base de nitrate de nickel et contenant une proportion de nitrate de cobalt correspondant à une proportion d'environ 5% d'hydroxyde de cobalt final vis-à-vis de l'hydroxyde de nickel final.

Cette micro-hétérogénéité peut être décelée par tout moyen approprié, par exemple à l'aide d'une microsonde de Castaing.

A cet égard, l'invention concerne donc les nouveaux produits que constituent les structures d'électrode positive, dont la matière active est constituée par l'hydroxyde de nickel au sein duquel l'hydroxyde de cobalt présent en proportion de 2 à 10% en poids vis à vis de l'hydoxyde de nickel au sein de la matière active se trouve dispersé de façon hétérogène, le collecteur étant à haute porosité, notamment du type fibreux non tissé, ou réticulé isotrope à porosité ouverte.

En particulier, l'invention concerne des structures du type sus-indiqué, dans lesquelles la partie interne au contact direct du collecteur, de l'épaisseur du revêtement que forme la matière active et qui épouse les porosités du collecteur de courant, est essentiellement dépourvue d'hydroxyde de cobalt. En particulier, il peut être observé que la majeure partie du cobalt ainsi incorporé au revêtement, est dispersée dans une région approximativement médiane de l'épaisseur du revêtement.

En particulier, la majeure partie du cobalt présent de l'ordre de 2 à 10%, notamment de 4 à 6%, à l'état d'hydroxyde vis-à-vis de l'hydroxyde de nickel, se concentre dans la région approximativement médiane du revêtement.

En d'autres termes encore, l'électrode selon l'invention peut être caractérisée comme possédant, au sein même des revêtements de matières actives, et plus particulièrement dans leurs zones approximativement médianes, des zones microvolumiques (par exemple de 1-10 $\mu m^3$ dans lesquelles l'hydroxyde de cobalt est prédominant vis-à-vis de l'hydroxyde de nickel.

Des structures préférées de l'invention peuvent être caractérisées comme comportant un collecteur métallique, à base de nickel, dont les pores avaient initialement des diamètres de 3 à 150, notamment de 15 à 100 $\mu m$, et en ce que la matière active occupe de 45 à 65%, notamment de 55 à 60%, du volume total initial de ces pores, et en ce que l'épaisseur de la structure d'électrode finale est comprise entre environ 0,1 et 4 millimètres. En particulier, des structures d'électrode appropriée auront des épaisseurs comprises entre environ 0,2 et 3 millimètres.

Comme il va de soi et comme il résulte d'ailleurs déjà de ce qui précède, l'invention ne se limite nullement à ceux de ses modes d'application et de réalisation qui ont été plus spécialement envisagés ; elle en embrasse au contraire toutes les variantes ; en particulier, l'invention concerne des électrodes modifiées de ce type dans lesquelles le métal constitutif du collecteur est autre que le nickel, par exemple est constitué par du cuivre.

Parmi les variantes de l'invention et qui consistent en des équivalents évidents de la structure et du procédé revendiqué ci-après, on mentionnera les structures obtenues au terme de procédés dans lesquels l'opération d'imprégnation électrochimique serait subdivisée en plus de deux étapes et dans lesquelles interviendraient plusieurs imprégnations non électrochimiques avec un sel de cobalt dans les conditions qui ont été rappelées plus haut. Il va naturellement de soi que le nombre de ces étapes ne peut être que réduit, ne seraitce qu'en raison de la minceur de l'électrode disponible et du volume toujours limité de remplissage partiel des pores du collecteur.

## Revendications

1. Structure d'électrode positive pour générateur électrochimique à électrolyte liquide, comprenant, d'une part, un collecteur de courant métallique notamment en nickel, à haute porosité, notamment du type fibreux non tissé ou du type réticulé isotrope à porosité ouverte et, d'autre part, une matière active, à base d'hydroxyde de nickel, réalisée par deux imprégnations électrochimiques, emplissant en partie les pores du collecteur et ayant une teneur en hydroxyde de cobalt, caractérisée par une dispersion hétérogène de l'hydroxyde de cobalt présent en proportion de 2 à 10% en poids vis-à-vis de l'hydroxyde de nickel au sein de la matière active, cette dispersion hétérogène de cobalt ayant été effectuée par l'intermédiaire d'une imprégnation non électrochimique intermédiaire entre les deux imprégnations électrochimiques de nickel.

2. Structure selon la revendication 1 ou la revendication 2, dans laquelle la matière active forme un revêtement poreux remplissant en partie les pores du collecteur de courant, caractérisée en ce que la partie interne de l'épaisseur du revêtement, qui est au contact direct du collecteur, est essentiellement dépourvue de cobalt.

3. Structure selon la revendication 1 ou la revendication 2 caractérisée en ce que la majeure partie du cobalt est dispersée dans une région approximativement médiane de l'épaisseur du revêtement.

4. Structure selon l'une quelconque des revendications 1 à 3, caractérisée en ce que l'hydroxyde de cobalt est présent dans la matière active en une proportion de 4 à 6% en poids vis-à-vis de l'hydroxyde de nickel.

5. Structure selon la revendication 1, caractérisée par des zones micro-volumiques au sein de la matière active, et plus particulièrement dans la zone approximativement médiane de l'épaisseur du revêtement, dans lesquelles l'hydroxyde de cobalt est prédominant vis-à-vis de l'hydroxyde de nickel.

6. Structure selon l'une quelconque des revendications 1 à 5, caractérisée en ce que la majeure partie des pores du collecteur métallique ont des diamètres de 3 à 150, notamment de 15 à 100 $\mu$m, en ce que la matière active occupe de 45 à 65%, notamment 55 à 60% du volume des pores du collecteur métallique, et en ce que l'épaisseur de la structure d'électrode est comprise entre 0,1 et 4 millimètres et, de préférence, n'excède par 3 millimètres.

7. Procédé de fabrication d'une structure d'électrode positive à porosité ouverte, à capacité massique élevée, comportant un collecteur de courant métallique notamment en nickel, à haute porosité notamment du type fibreux non tissé, ou du type réticulé isotrope à porosité ouverte, ce procédé comprenant l'immersion du collecteur dans un bain d'électrolyse où est réalisée son imprégnation, dans son volume même en hydroxyde de nickel qui formera la matière active de l'électrode, l'opération d'imprégnation électrochimique étant réglée de façon à assurer un remplissage partiel des pores du collecteur avec la matière active, ce procédé étant caractérisé par la subdivision de l'opération électrochimique en une première et seconde étapes respectivement distinctes et par l'intercalation, entre les susdites première et seconde étapes, d'une imprégnation non électrochimique, dite de dopage, de la structure d'électrode partiellement réalisée au terme de la première étape avec une solution concentrée de nitrate de cobalt, contenant notamment de 100 à 1000 g/litre, de préférence de 200 à 800 g/litre, de nitrate de cobalt ou d'un sel équivalent par sa capacité à être réduit en hydroxyde de cobalt à l'occasion de la deuxième étape ultérieure de la réduction électrochimique, l'imprégnation non électrochimique autorisant l'incorporation d'une quantité, exprimée en hydroxyde de cobalt final, d'environ 2 à 10% en poids vis-à-vis de la teneur finale en hydroxyde de nickel de l'électrode finie.

8. Procédé selon la revendication 7, caractérisé en ce que l'imprégnation non électrochimique (dopage) est conduite dans des conditions autorisant l'incorporation d'une quantité, exprimée en hydroxyde de cobalt final, de l'ordre de 4 à 6% en poids vis-à-vis de la teneur finale en l'hydroxyde de nickel de l'électrode finie.

9. Procédé selon la revendication 7 ou 8, caractérisé par le fait que la première étape d'imprégnation électrochimique est réglée de façon à permettre le dépôt dans les pores du collecteur d'une quantité d'hydroxyde de nickel de l'ordre de 70 à 90% de la quantité finale dans la structure d'électrode finie.

10. Procédé selon l'une quelconque des revendications 7 à 9, caractérisé en ce que les pores du collecteur à haute porosité ont des diamètres de 3 à 150, notamment de 15 à 100 $\mu$m, et en ce que les deux étapes de l'imprégnation électrochimique sont réglées de façon à ce que la matière active occupe finalement de 45 à 65%, notamment de 55 à 60%, du volume initial des pores du substrat poreux.

**Claims**

1. Structure of a positive electrode for an electrochemical generator using a liquid electrolyte, comprising, on the one hand, a metallic current collector made of nickel in particular, of high porosity, in particular of the non-woven fibrous type or the isotropic, cross-linked type of open porosity and, on the other hand, a nickel hydroxide-based active material constructed by the two electrochemical impregnations which partially fill the pores of the collector and contain cobalt, characterized by a heterogeneous dispersion of the cobalt hydroxide present in a proportion of 2% to 10% by weight of the nickel hydoxide within the active material, this heterogeneous dispersion of cobalt being effected by interposing a non-electrochemical impregnation between the two electrochemical impregnations with nickel.

2. Structure according to claim 1, in which the active material forms a porous lining filling in part the pores of the current collector, characterized in that the innermost part of the thickness of the lining, which is in direct contact with the collector is essentially free of cobalt.

3. Structure according to claim 1 or to claim 2, characterized in that the major portion of the cobalt is dispersed in a region occupying approximately the median position of the thickness of the plating.

4. Structure according to any one of the claims 1 to 3, characterized in that the cobalt hydroxide is present in the active material in a proportion of 4% to 6%, by weight of the nickel hydroxide.

5. Structure according to claim 1, characterized by zones of micro-volume within the active material, and more particularly in the approximately median zone of the thickness of the plating, in which cobalt hydroxide predominates over nickel hydroxide.

6. Structure according to any one of claims 1 to 5, characterized in that the majority of the pores of the metallic collector have diameters from 3 to 150, and in particular from 15 to 100$\mu$m, in that the active material occupies 45% to 65%, and in particular 55% to 60% of the volume of the pores of the metallic collector, and in that the thickness of the electrode structure lies between 0.1 and 4 millimeters and preferably does not exceed 3 millimeters.

7. Process for the manufacture of a positive structure of open porosity, which high mass capacity, comprising a current collector electroplated in particular with nickel, of high porosity in particular of the non-woven fibrous type or of the isotropic, cross-linked type of open porosity, this process including the immersion of the collector in an electrolysis bath in which its impregnation is carried out throughout its total bulk with nickel hydroxide which will form the active material of the electrode, the operation of electrochemical impregnation being regulated in a manner so as to ensure a partial filling of the pores of the collector with the active material, this process being characterized by the subdivision of the electrochemical operation into two distinct steps and by interposing between the first and the second step a non-electrochemical impregnation, called doping, of the electrode structure which was partially finished at the end of the first step with a concentrated solution of cobalt nitrate, containing from 100 to 1,000g/liter in particular, but preferably 200 to 800g/liter of cobalt nitrate, or a salt equivalent in the sense that it can be reduced to cobalt hydroxide during the second step of the electrochemical reduction, the non-electrochemical impregnation permitting the incorporation of a quantity, expressed in final cobalt hydroxide, of approximately 2% to 10% by weight of the final nickel hydroxide content of the finished electrode.

8. Process according to claim 7, characterized in that the non-electrochemical impregnation (doping) is conducted under conditions permitting the incorporation of a final quantity of cobalt hydroxide corresponding to the order of 4% to 6% by weight, of the final nickel hydroxide content of the finished electrode.

9. Process according to claim 7 or 8, characterized by the fact that the first step of electrochemical impregnation is regulated in a manner so as to permit the deposition in the pores of the collector of a quantity of nickel hydroxide corresponding to about 70% to 90% of the final amount present in the structure of the finished electrode.

10. Process according to any one of the claims 7 or 9, characterized in that the pores of the collector of high porosity have diameters varying from 3 to 150, and in particular from 15 to 100$\mu$m, and in in that the two steps of the electrochemical impregnation are regulated in a manner such that the active material finally occupies from 45% to 65%, in particular from 55% to 60%, of the initial volume of the pores of the porous substrate.

**Patentansprüche**

1. Struktur einer positiven Elektrode für einen elektrochemischen Generator mit flüssigem Elektrolyt, enthaltend einerseits einen metallischen Stromkollektor insbesondere aus Nickel, mit hoher Porosität, insbesondere vom nicht gewebten Fasertyp oder vom isotropen netzartigen Typ mit offener Porosität und, andererseits, ein durch zwei elektro-chemische Imprägnationen verwirklichtes aktives Material auf Basis von Nickelhydroxid, das zum Teil die Poren des Kollektors ausfüllt und einen Gehalt an Kobalthydroxid aufweist, gekennzeichnet durch eine heterogene Dispersion des vorhandenen Kobalthydroxids im Verhältnis von 2 bis 10 Gewichtsprozent gegenüber dem Nickelhydroxid in dem aktiven Material, wobei die heterogene Dispersion des Kobalts mit Hilfe einer nicht elektro-chemischen Imprägnation zwischen den beiden elektro-chemischen Imprägnationen des Nickels bewirkt wurde.

2. Struktur nach Anspruch 1 oder Anspruch 2, bei der das aktive Material eine zum Teil die Poren des Stromkollektors füllende poröse Verkleidung bildet, dadurch gekennzeichnet, daß der innere Teil der Dicke der Verkleidung, der im direkten Kontakt mit dem Kollektor ist, im wesentlichen frei von Kobalt ist.

3. Struktur nach Anspruch 1 oder 2, dadurch gekennzeichnet, daß der Großteil des Kobalts in einem Bereich dispergiert ist, der etwa in der Mitte der Dicke der Verkleidung liegt.

4. Struktur nach einem der Ansprüche 1 bis 3, dadurch gekennzeichnet, daß das Kobalthydroxid in dem aktiven Material in einem Anteil von 4 bis 6 Gewichtsprozent gegenüber dem Nikkelhydroxid vorhanden ist.

5. Struktur nach Anspruch 1, gekennzeichnet durch Mikrovolumenzonen in dem akiven Material und insbesondere in der etwa in der Mitte der Dicke der Auskleidung angeordneten Zone, in denen das Kobalthydroxid gegenüber dem Nickelhydroxid vorherrschend ist.

6. Struktur nach einem der Ansprüche 1 bis 5, dadurch gekennzeichnet, daß der Großteil der Poren des metallischen Kollektors Durchmesser von 3 bis 150, insbesondere von 15 bis 100 $\mu$m aufweist, daß das aktive Material von 45 bis 65 %, insbesondere von 55 bis 60 % des Volumens der Poren des metallischen Kollektors belegt, und daß die Dicke der Struktur der Elektrode zwischen 0,1 und 4 mm liegt und vorzugsweise 3 mm nicht überschreitet.

7. Verfahren zur Herstellung einer Struktur einer positiven Elektrode mit offener Porosität, mit erhöhter Massenkapazität, mit einem metallischen Stromkollektor insbesondere aus Nickel, mit hoher Porosität insbesondere vom nichtgewebten Faser-Typ oder vom isotropen netzartigen Typ mit offener Porosität, wobei das Verfahren das Eintauchen des Kollektors in ein Elektolysebad umfaßt, wo seine Imprägnierung in seinem eigenen Volumen aus Nikkelhydroxid verwirklicht wird, das das aktive Material der Elektrode bilden wird, und wobei der Betrieb der elektro-chemischen Imprägnierung derart reguliert wird, daß eine teilweise Füllung der Poren des Kollektors mit dem aktiven Material gewährleistet wird, wobei das Verfahren durch die Unterteilung des elektro-chemischen Verfahrensschrittes in eine erste und eine zweite verschiedene Etappe und durch die Einschaltung, zwischen der ersten und zweiten Etappe, einer nicht-elekro-chemischen Imprägnierung, der sogenannten Dotierung, der im Verlauf der ersten Etappe teilweise verwirklichten Elektrodenstruktur mit einer konzentrierten Lösung von Kobaltnitrat gekennzeichnet ist, die insbesondere von 100 bis 1000 g/Liter, vorzugsweise von 200 bis 800 g/Liter Kobaltnitrat oder ein durch seine Fähigkeit, während der zweiten Etappe nach der elektro-chemischen Reduktion zu Kobalthydroxid reduziert zu werden, äquivalentes Salz enthält, wobei die nichtelektro-chemische Imprägnierung die Hinzufügung einer in schließlichem Kobalthydroxid ausgedrückten Menge von etwa 2 bis 10 Gewichtsprozent gegenüber dem Endgehalt an Nickelhydroxid der fertigen Elektrode erlaubt.

8. Verfahren nach Anspruch 7, dadurch gekennzeichnet, daß die nicht-elektro-chemische Imprägnierung (Dotierung) unter Bedingungen durchgeführt wird, die das Hinzufügen einer in endgültigem Kobalthydroxid ausgedrückten Menge der Größenordnung von 4 bis 6 Gewichtsprozent gegenüber dem endgültigen Gehalt an Nickelhydroxid der fertigen Elektrode erlaubt.

9. Verfahren nach Anspruch 7 oder 8, dadurch gekennzeichnet, daß die erste Etappe der elektro-chemischen Imprägnierung derart reguliert wird, daß die Ablagerung einer Menge von Nickelhydroxid der Größenordnung von 70 bis 90 % der Endmenge in der Struktur der fertigen Elektrode, in den Poren des Kollektors ermöglicht wird.

10. Verfahren nach einem der Ansprüch 7 bis 9, dadurch gekennzeichnet, daß die Poren des Kollektors mit hoher Porosität Durchmesser von 3 bis 150, insbesondere von 15 bis 100 m aufweisen, und daß die beiden Etappen der elektro-chemischen Imprägnierung derart reguliert werden, daß das aktive Material schließlich von 45 bis 65 %, insbesondere von 55 bis 60 % des Anfangsvolumens der Poren des porösen Substrats belegt.